# EUROPEAN PATENT APPLICATION

(11) **EP 4 557 578 A1**
(43) Date of publication of application: **21.05.2025**
(21) Application number: 24195447.8
(22) Date of filing: 20.08.2024
(51) Int. Cl.: H02K 1/24, H02K 29/03

(54) **LOW-TORQUE RIPPLE SYNCHRONOUS RELUCTANCE MOTOR**

(30) Priority: 16.11.2023 TW 112144360
(71) Applicant: National Ilan University, Yilan City 260 (TW)
(72) Inventor: Chen, Cheng-Hu, 260 Yilan City (TW); Xu, Jun-Wei, 260 Yilan City (TW)
(74) Representative: Gee, Steven William

(57) **Abstract**

Provided is a low-torque ripple synchronous reluctance motor, including: a stator, including a plurality of stator slots and a plurality of stator teeth, each of the stator teeth including a stator tooth center; and a rotor, including a plurality of motor poles, each of the motor poles including a plurality of rotor barriers, the rotor barriers including a first rotor barrier to an n-th rotor barrier; a first rotor barrier end center line and a corresponding stator tooth center line defining a first included angle (θb), an n-th rotor barrier end center line and a corresponding stator tooth center line defines an included angle (θn), (θn)=[(n-1)xk+1]xθb, the real number (k) is any value within the range of 2±0.5, and the formula of the first included angle (θb) is any value within the range of the first included angle (θb)=36/Ns ±0.5°, Ns is the number of stator slots.

## Description

### CROSS-REFERENCE TO RELATED APPLICATION

This application claims the priority of Taiwanese patent application No. 112144360, filed on November 16, 2023, which is incorporated herewith by reference.

### BACKGROUND OF THE INVENTION

### 1. Field of the Invention

The present invention relates generally to a structure of motor, and more particularly, to a low-torque ripple synchronous reluctance motor.

### 2. The Prior Arts

In the conventional technologies, the electromagnetic torque of the synchronous reluctance motor comes from the difference of magnetic resistance, and the torque ripple is defined as an important performance index used to evaluate the smoothness of the output torque in a torque cycle. Since the torque of the synchronous reluctance motor comes from the difference of magnetic resistance, the magnetic resistance, that is, when the rotor position changes, different reluctances will be produced in the closed magnetic circuit due to changes in the rotor position under the same stator magnetomotive force. That is, the line-to-line inductance of the stator coil will change significantly with the change of the rotor position.

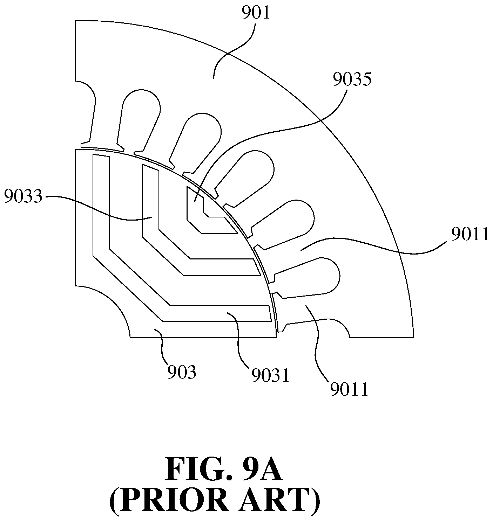

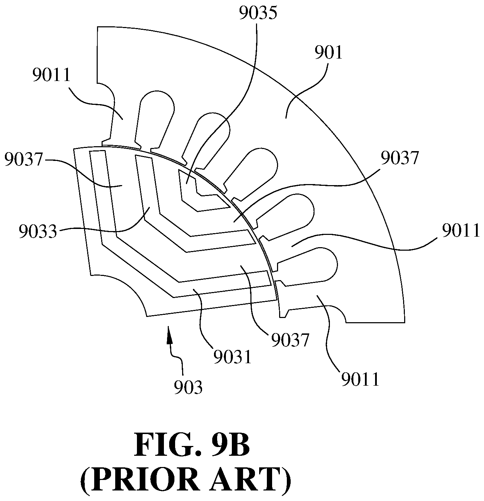

The following explains the causes of torque ripple. FIG. 9A is a schematic view illustrating the structure in which the center of each barrier in the synchronous reluctance motor of the prior art is aligned with the stator tooth center; FIG. 9B is a schematic view illustrating the structure of the synchronous reluctance motor of the prior art in which the center of each magnetic channel is aligned with the stator tooth center. Referring to FIG. 9A first, in the conventional technology, when the stator tooth center 9011 of the stator 901 is aligned with the center of each barrier (such as barrier 9031, barrier 9033, and barrier 9035) of the rotor 903, as shown in FIG. 9A, which shows that this is position where the reluctance torque of the synchronous reluctance motor is large. Since the reluctance of the magnetic circuit is large at this position, the rotor 903 has a tendency to move in the direction of small reluctance. Therefore, when the rotor 903 is at this position, a large electromagnetic torque will be generated. On the other hand, when the stator tooth center 9011 of the stator 901 is aligned with the center of each magnetic channel 9037 of the rotor 903, as shown in FIG. 9B, it is easy to establish a magnetic field since the magnetic resistance of the magnetic circuit at this position is small. Therefore, the rotor 903 will generate less torque at this position.

As a result, when the rotor 903 moves from the position of FIG. 9A to the position of FIG. 9B, the electromagnetic torque output of the rotor 903 will be uneven, which is the main cause of torque ripples, and excessive torque ripples will cause the synchronous reluctance motor to produce greater noise and mechanical vibration.

### SUMMARY OF THE INVENTION

A primary objective of the present invention is to provide a low-torque ripple synchronous reluctance motor that can effectively reduce torque ripple in the aforementioned prior arts.

For achieving the foregoing objective, the present invention provides a low-torque ripple synchronous reluctance motor includes: a stator, including a plurality of stator slots (Ns) and a plurality of stator teeth, each of the stator teeth including a stator tooth center; and a rotor, including a plurality of motor poles, each of the motor poles including a plurality of rotor barriers, the rotor barriers including a first rotor barrier to an n-th rotor barrier, the first rotor barrier including a first rotor barrier end center, the n-th rotor barrier includes an n-th rotor barrier end center, where n is a positive integer greater than 1; wherein, a first rotor barrier end center line is defined between the first rotor barrier end center and a center of the rotor include, a stator tooth center line is defined between the stator tooth center and the center of the rotor, and the first rotor barrier end center line and a corresponding stator tooth center line defines a first included angle (θb), wherein an n-th rotor barrier end center line is defined between the n-th rotor barrier end center line and the center of the rotor, and the n-th rotor barrier end center line and a corresponding stator tooth center line defines an included angle (θn), wherein the formula of the included angle (θn) is: (θn)=[(n-1)×k+1]×θb, the real number (k) is any value within the range of 2±0.5, and the formula of the first included angle (θb) is any value within the range of the first included angle (θb)=36/Ns ±0.5°, (Ns) is the number of stator slots.

Preferably, the number of stator slots (Ns) is 24, and each of the motor poles includes two or three rotor barriers.

Preferably, the number of stator slots (Ns) is 36, and each of the motor poles includes three or four rotor barriers.

Preferably, the number of stator slots (Ns) is 48, and each of the motor poles includes four, five or six rotor barriers.

Preferably, since factors such as the stator slot opening size and rotor air gap width will change with different load and speed conditions, in order to achieve the best output torque and ripple, the included angle (θn) can include a deviation of any value within the range±72/Ns °.

The present invention provides a low-torque ripple synchronous reluctance motor. The low-torque ripple synchronous reluctance motor of the present invention includes the following effects and advantages: 1. the present invention provides a new formula of the first angle (θb) and the formula of other included angles (θn) to allow users to design a low-torque ripple synchronous reluctance motor based on the formulas. 2. the present invention effectively adjusts the phase of the output torque corresponding to each magnetic barrier through the setting of the first included angle (θb), so as to effectively suppress the maximum and minimum values of the resultant torque to achieve the objective of reducing peak and valley to provide a structure of low-torque ripple synchronous reluctance motor.

### BRIEF DESCRIPTION OF THE DRAWINGS

The present invention will be apparent to those skilled in the art by reading the following detailed description of a preferred embodiment thereof, with reference to the attached drawings, in which:
FIG. 1 is a schematic structural view of a synchronous reluctance motor when the first included angle (θb) of the present invention is zero.
FIG. 2 is a schematic view of the relationship between the electromagnetic torque and the rotor position when the first included angle (θb) of the present invention is zero.
FIG. 3 is a schematic view of the relationship curve of the phase and magnitude between the output torque of each barrier and of each output torque when the first included angle (θb) of the present invention is zero.
FIG. 4A is a schematic structural view of a low-torque ripple synchronous reluctance motor according to an embodiment of the present invention.
FIG. 4B is a schematic structural view of a low-torque ripple synchronous reluctance motor according to an embodiment of the present invention.
FIG. 5A is a schematic view of the relationship between the torque ripple and the first included angle (θb) according to an embodiment of the present invention.
FIG. 5B is a schematic view of the relationship between torque ripple and real number (k) according to an embodiment of the present invention.
FIG. 6A is a schematic structural view of a low-torque ripple synchronous reluctance motor according to another embodiment of the present invention.
FIG. 6B is a schematic view of the relationship curve of the phase and magnitude between the output torque of each barrier and each output torque in another embodiment of the present invention.
FIG. 6C is a schematic view of the relationship between the first included angle (θb) and the torque in another embodiment of the present invention.
FIG. 7A is a schematic view of the relationship between the first included angle (θb) and the torque ripple in yet another embodiment of the present invention.
FIG. 7B is a schematic view of the relationship between the real number (k) and the torque ripple in yet another embodiment of the present invention.
FIG. 7C is a schematic view of the relationship between the first included angle (θb) and the torque in yet another embodiment of the present invention.
FIG. 8A is a schematic view of the relationship between the first included angle (θb) and the torque ripple in yet another embodiment of the present invention.
FIG. 8B is a schematic view of the relationship between the real number (k) and the torque ripple in yet another embodiment of the present invention.
FIG. 8C is a schematic view of the relationship between the first included angle (θb) and the torque in yet another embodiment of the present invention.
FIG. 9A is a schematic structural view of a conventional synchronous reluctance motor in which the center of each barrier is aligned with the stator tooth center.
FIG. 9B is a schematic structural view of a conventional synchronous reluctance motor in which the center of each magnetic channel is aligned with the stator tooth center.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

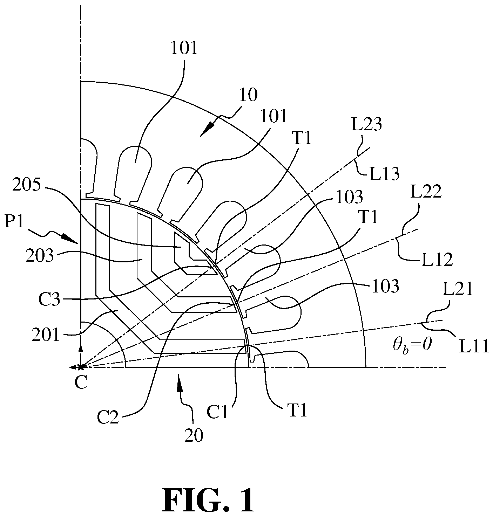

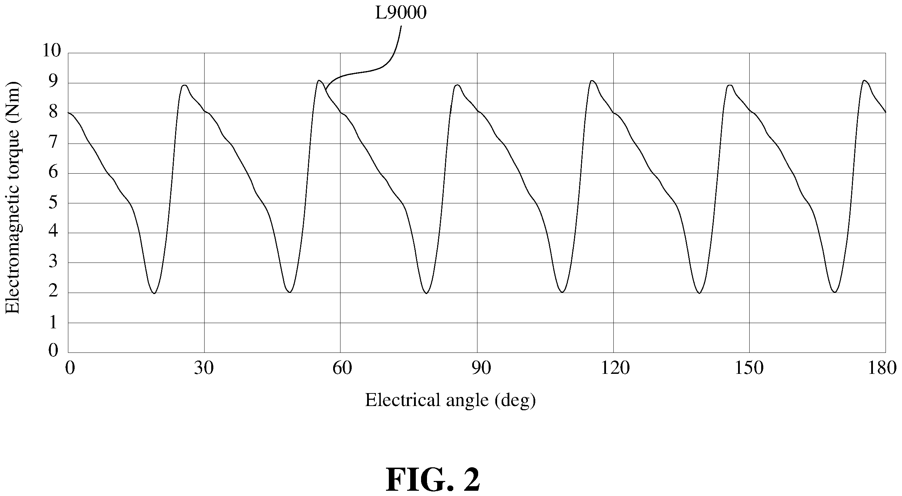

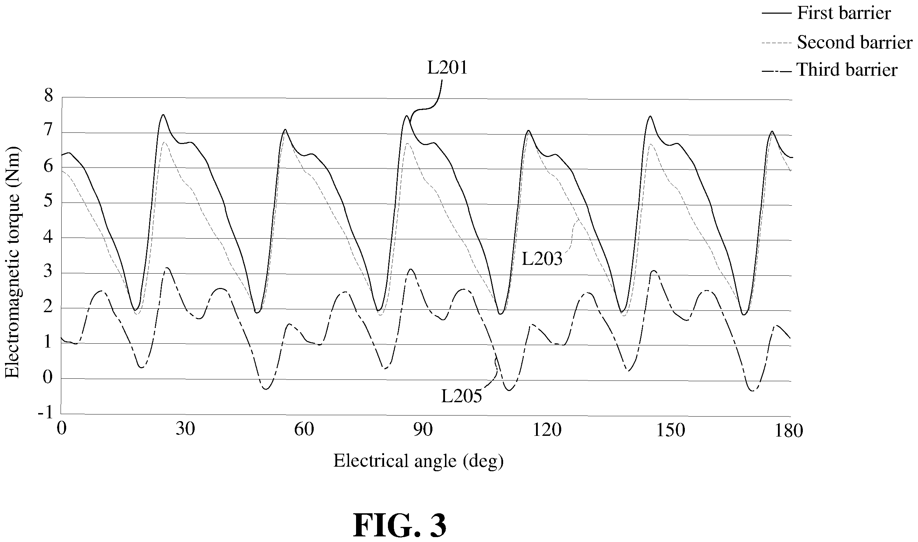

FIG. 1 is a schematic view illustrating the structure of the synchronous reluctance motor when the first included angle (θb) of the present invention is zero; FIG. 2 is a schematic view illustrating the relationship between the electromagnetic torque and the rotor position when the first included angle (θb) of the present invention is zero; FIG. 3 is a schematic view illustrating the relationship curve of the phase and magnitude between the output torque of each barrier and of each output torque when the first included angle (θb) of the present invention is zero. Refer to FIGS. 1 to 3. Since the effect of torque ripple comes from the cogging effect between the complex stator and the rotor, the present invention focuses on the impact of each barrier on the torque ripple, and finds the motor structure with minimum torque ripple. In an embodiment of the invention, a low-torque ripple synchronous reluctance motor includes a stator 10 and a rotor 20. The stator 10 includes a plurality of stator slots 101 and a plurality of stator teeth 103. Each stator tooth 103 includes a stator tooth center T1.

The rotor 20 includes a plurality of motor poles, and each motor pole includes a plurality of rotor barriers. The rotor barriers include a first rotor barrier to an n-th rotor barrier, and the first rotor barrier includes a first rotor barrier end center, the n-th rotor barrier includes an n-th rotor barrier end center, and n is a positive integer greater than 1. For example, in an embodiment of the present invention, the rotor 20 includes four motor poles. FIG. 1 shows one of the motor poles P1, and the motor poles P1 include the first rotor barrier 201, the second rotor barrier 203, and the third rotor barrier 205. The first rotor barrier 201 includes a first rotor barrier end center C1, the second rotor barrier 203 includes a second rotor barrier end center C2, and the third rotor barrier 205 includes a third rotor barrier end center C3, and so on. As such, the n-th rotor barrier and the n-th rotor barrier end center can be obtained.

Wherein, a first rotor barrier end center line L11 is included between the first rotor barrier end center C1 and a center C of the rotor 20, and a stator tooth center line is included between the stator tooth center T1 and the center C of the rotor 20, such as stator tooth center line L21, stator tooth center line L22 and stator tooth center line L23, the first rotor barrier end center line L11 and the corresponding stator tooth center line L21 define a first included angle (θb).

First, the present invention finds that the first included angle (θb) is a key design parameter that affects the torque ripple. When each rotor barrier end center line overlaps with the corresponding stator tooth center line, for example, the first rotor barrier end center line L11 overlaps the corresponding stator tooth center line L21, the second rotor barrier end center line L12 overlaps with the corresponding stator tooth center line L22, and so on. At this time, the first included angle (θb) is 0 degrees, and the output torque curve L9000 shown in FIG. 2 will be generated between the torque and the rotor position. Through the superposition principle, each torque outputted by the first rotor barrier 201, the second rotor barrier 203 and the third rotor barrier 205, and the phase relationship between each other can be obtained. The phase and magnitude relationship between the electromagnetic torques generated by each rotor barrier are shown in FIG. 3. For example, curve L201 is the electromagnetic torque curve of the first rotor barrier 201, curve L203 is the electromagnetic torque curve of the second rotor barrier 203, and curve L205 is the electromagnetic torque curve of the third rotor barrier 205. It can be seen in FIG. 2 and FIG. 3 that when the first included angle (θb) is 0 degrees, the output torque will produce considerable fluctuations. At this time, the torque ripple is as high as 119%. The above analysis clearly shows that designers must effectively phase-adjust the output torque corresponding to each magnetic barrier to effectively suppress the difference between the maximum and minimum values of the resultant torque to achieve lessening peak and valley. This is the main discovery of the present invention and the main direction to solve the high torque ripple.

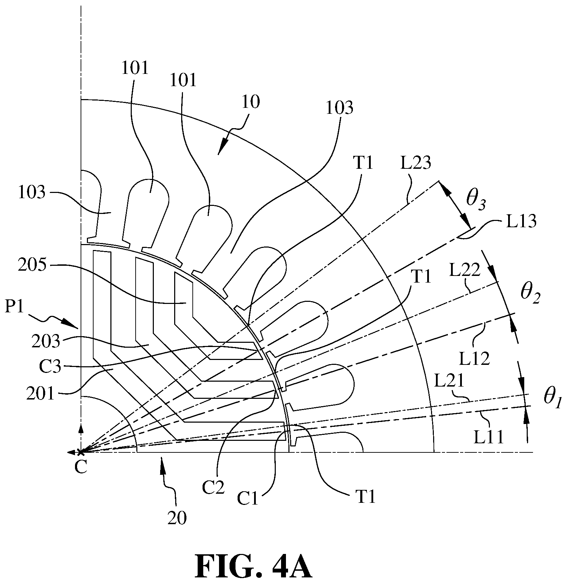

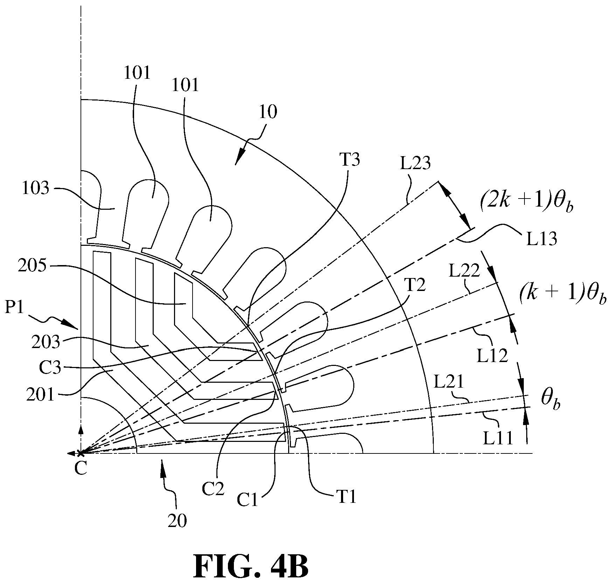

FIG. 4A is a schematic view illustrating the structure of a low-torque ripple synchronous reluctance motor according to an embodiment of the present invention; FIG. 4B is a schematic view illustrating the structure of a low-torque ripple synchronous reluctance motor according to an embodiment of the present invention. Refer to FIGS. 4A and 4B. In an embodiment of the present invention, in addition to adjusting the first included angle (θb), the included angle between each rotor barrier end center and the stator tooth center is further configured. Specifically, there is an n-th rotor barrier end center line defined between the n-th rotor barrier end center and the center C of the rotor 20, and the n-th rotor barrier end center line and the corresponding stator tooth center line defines an included angle (θn), for example, a first rotor barrier end center line L11 is defined between the first rotor barrier end center C1 and the center C of the rotor 20, the first rotor barrier end center line L11 and the corresponding stator tooth center line L21 includes a first included angle (Θ1) and the first included angle (01) is (θb). A second rotor barrier end center line L12 is defined between the second rotor barrier end center C2 and the center C of the rotor 20. The second rotor barrier end center line L12 and the corresponding stator tooth center line L22 include an included angle (Θ2). The third rotor barrier end center C3 and the center C of the rotor 20 define a third rotor barrier end center line L13, and the third rotor barrier end center line L13 and the corresponding stator tooth center line L23 include an included angle (θ3).

In the present invention, the formula of the included angle (θn) is as follows: (θn)=[(n-1)×k+1]×θb, and the real number (k) is any value within the range of 2±0.5; the formula of the first included angle (θb) is any value within the range of 36/Ns ±0.5°, where (Ns) is the number of stator slots 101. Therefore, the first included angle (θ1), the included angle (Θ2) and the included angle (Θ3) in FIG. 4A respectively correspond to the first included angle (θb) and the second included angle (k+1) θb and the third included angle (2k+1) θb in FIG. 4B.

It is worth mentioning that since factors such as the opening size of the stator slot 101 and the air gap width of the rotor 20 will change with different load and speed conditions, in order to achieve the best output torque and ripple, the included angle (θn) may be further includes a deviation of any value within the range of ±72/Ns °.

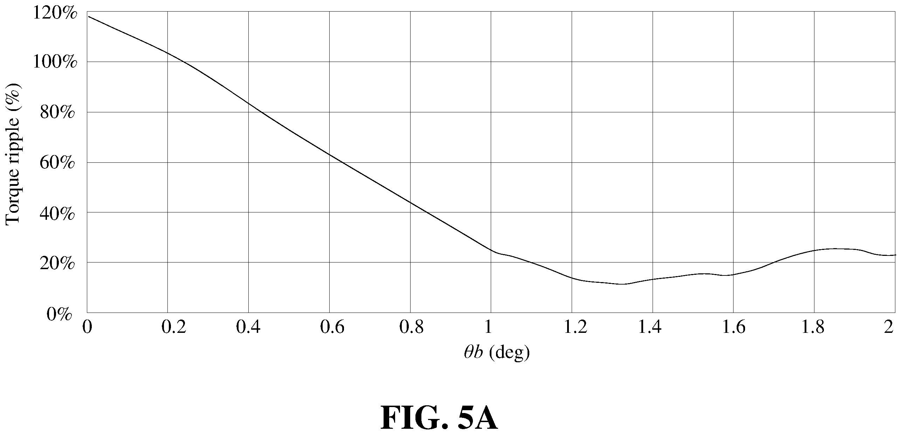

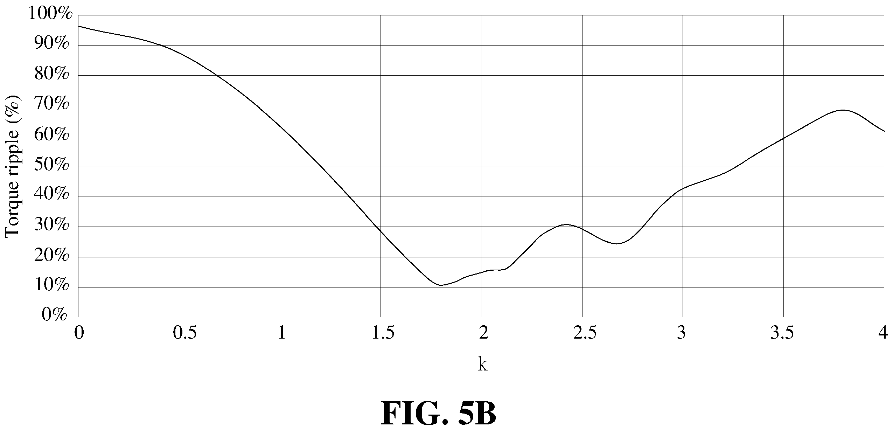

FIG. 5A is a schematic view illustrating the relationship between the torque ripple and the first included angle (θb) in an embodiment of the present invention; FIG. 5B is a schematic view illustrating the relationship between torque ripple and real number (k) according to an embodiment of the present invention. As shown in FIG. 5A and FIG. 5B, in an embodiment of the present invention, the relationship between the first angle (θb), the real number (k) and the torque ripple has been effectively obtained. The minimum torque ripple can be obtained when the value of the real number (k) is within the range of 2±0.5, and the first included angle (θb) can have the minimum torque ripple between 1.25 degrees and 1.75 degrees. Therefore, the maximum and minimum torque generation positions of each barrier can be effectively staggered through the design of the included angle (θn), and the torque ripple can be minimized without affecting the effective output torque. It should be understood that the first included angle (θb) that can have the smallest torque ripple may vary due to the change of the number (Ns) of the stator slots 101.

In other words, the present invention details the relationship and design method between the central rotor, the stator and the torque ripple of the synchronous reluctance motor, that is, there is an included angle (θn), and the included angle (θn) is related to the first included angle (θb). As such, the output torque corresponding to each magnetic barrier can be effectively phase-adjusted by setting the first included angle (θb) to effectively suppress the maximum and minimum values of the resultant torque to achieve the objective of lessening peak and valley of the fluctuation, and provide the structure of a low-torque ripple synchronous reluctance motor.

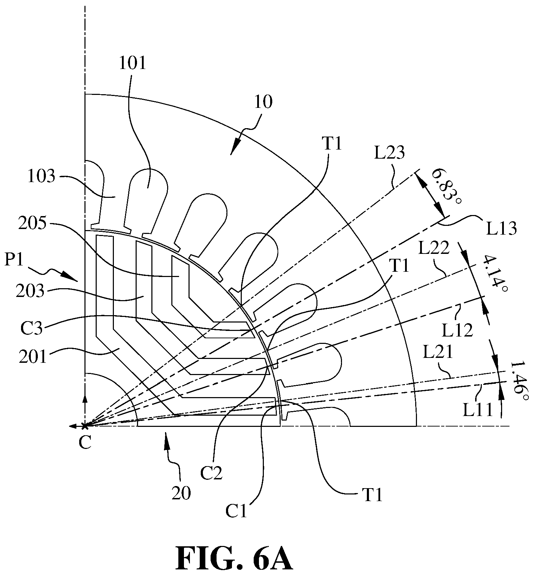

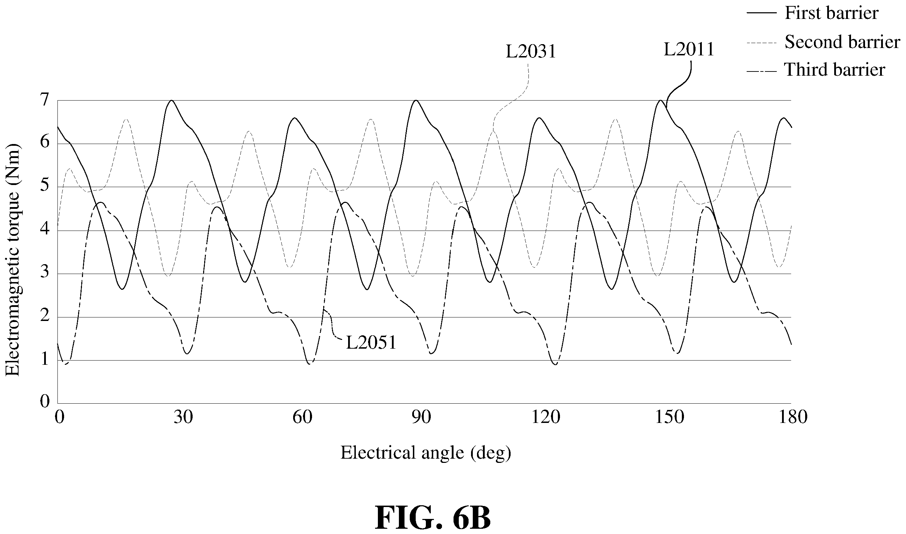

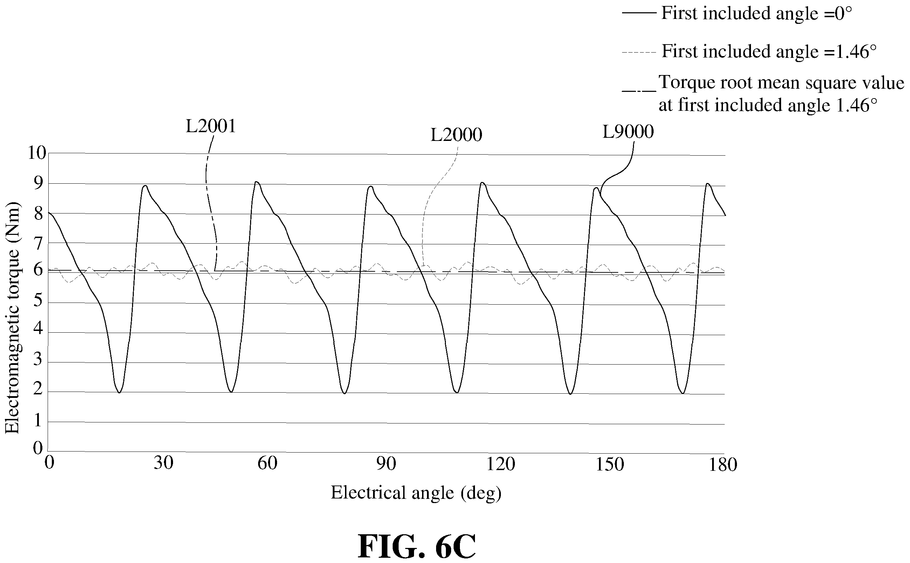

FIG. 6A is a schematic structural view illustrating a low-torque ripple synchronous reluctance motor according to another embodiment of the present invention; FIG. 6B is a schematic view illustrating the relationship of the phase and magnitude between the output torque curves of each barrier and each output torque in another embodiment of the present invention; FIG. 6C is a schematic view illustrating the relationship between the first included angle (θb) and the torque in another embodiment of the present invention. Refer to FIGS. 6A to 6C. In another embodiment of the present invention, the number of stator slots 101 is twenty-four (Ns=24), the number of motor poles is four, and each motor pole number includes two or three rotor barriers, for example, the motor pole number P1 shown in FIG. 6A includes three rotor barriers (the first rotor barrier 201, the second rotor barrier 203 and the third rotor barrier 205). Under this structure, the real number (k) is set to 1.84. According to the formula of the first included angle (θb)=36/Ns ±0.5°, the first included angle (θb) can be set to 1.46°, and then according to the formula of (θn), the included angle (θn)=[(n-1)×k+1]×θb, the included angle (Θ2) is set 4.14° and the included angle (Θ3) is set to 6.83°. The curve L2011 of the first rotor barrier 201, the curve L2031 of the second rotor barrier 203, and the curve L2051 of the third rotor barrier 205 can be seen in FIG. 6B, where the included angle (θn) may further include a deviation of any value within the range of ±72/Ns °.

Under the structure of the present embodiment, FIG. 6C shows the curve L2000 of the first included angle (θb)=1.46°, the torque root mean square value curve L2001 of the first included angle (θb)=1.46° and the curve L9000 of the first included angle. (θb) =0°. It can be seen from the torque root mean square value curve L2001 that the output torque of the low-torque ripple synchronous reluctance motor is 6.08 Newton meters (Nm), and the torque ripple of the low-torque ripple synchronous reluctance motor is 10.48%. Therefore, compared with curve L9000, the present invention can effectively reduce the torque ripple from 117.71% (at (θb)=0°) to 10.48% (at (θb)=1.46°). Through overlapping analysis and from the curve graph in FIG. 6B, it can be seen that the maximum and minimum of the output torque of the position of each barrier can be effectively staggered, achieving the effect of lessening peak and valley and suppressing torque ripple. It should be understood that when each motor pole number includes two rotor barriers, it only needs to set the first included angle (θb) and then follow the formula of the included angle (θn), the included angle (θn) = [(n -1) ×k+1]×θb to obtain the angle (θ2).

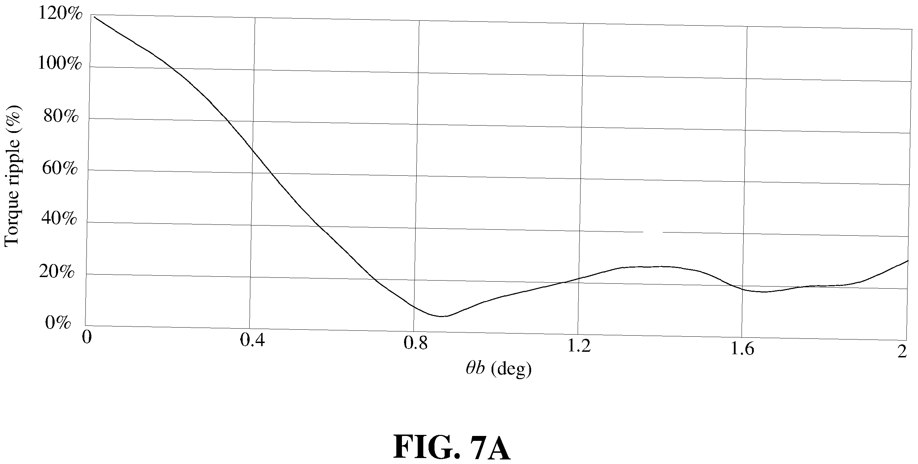

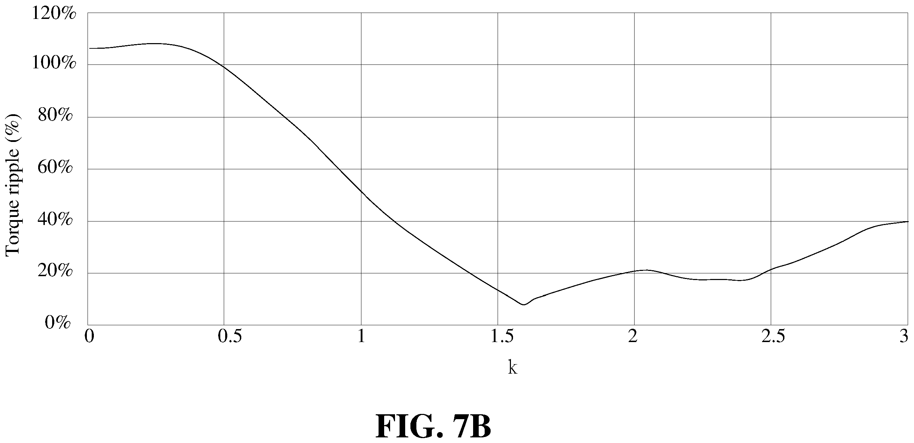

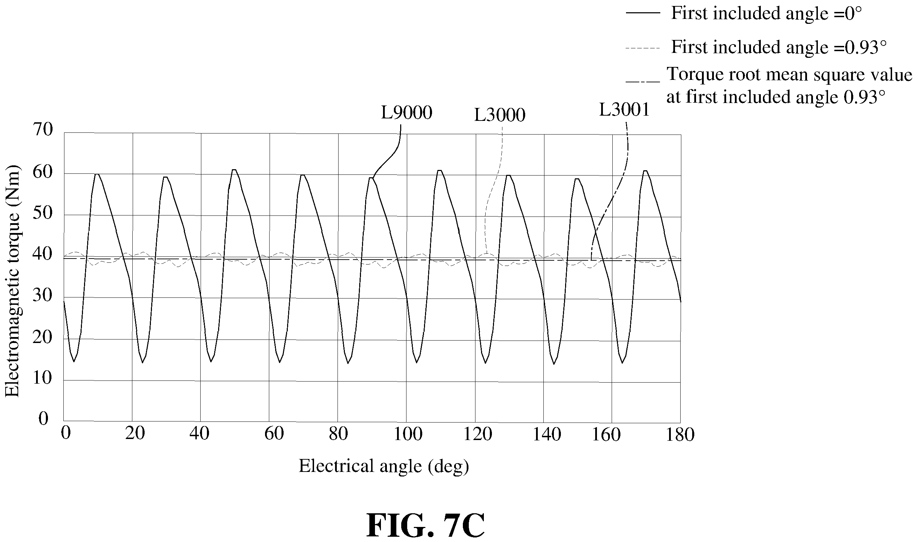

FIG. 7A is a schematic view illustrating the relationship between the first included angle (θb) and the torque ripple in yet another embodiment of the present invention; FIG. 7B is a schematic view illustrating the relationship between the real number (k) and the torque ripple in another embodiment of the present invention; FIG. 7C is a schematic view illustrating the relationship between the first included angle (θb) and the torque in yet another embodiment of the present invention. Refer to FIG. 4A and FIG. 7A to FIG. 7C. In yet another embodiment of the present invention, the number of stator slots 101 is thirty-six (Ns=36), and each motor pole number includes three or four rotor barriers. Under this structure, the real number (k) is set to 1.61. According to the formula of the first included angle (θb) = 36/Ns ±0.5°, the first included angle (θb) can be set to 0.93°, and then according to the formula of (θn), included angle (θn)=[(n-1)×k+1]×θb, can get the remaining included angles (θn), in which the included angle (θn) can further include a deviation of any value within the range of ±72/ Ns °.

Under the structure of the present embodiment, FIG. 7C shows the curve L3000 of the first included angle (θb)=0.93°, the torque root mean square value curve L3001 of the first included angle (θb)=0.93° and the curve L9000 of the first included angle (θb) =0°. It can be seen from the torque root mean square value curve L3001 that the output torque of the low-torque ripple synchronous reluctance motor is 39.54 Newton meters (Nm), and the torque ripple of the low-torque ripple synchronous reluctance motor is 9.12%. Therefore, compared with curve L9000, the present invention can effectively reduce the torque ripple from 118.85% (at (θb)=0°) to 9.12% (at (θb)=0.93°). Similarly, through overlapping analysis, it can be found that the maximum and minimum of the output torque of the position of each barrier can be effectively staggered, achieving the effect of lessening peak and valley of the fluctuation and suppressing torque ripples.

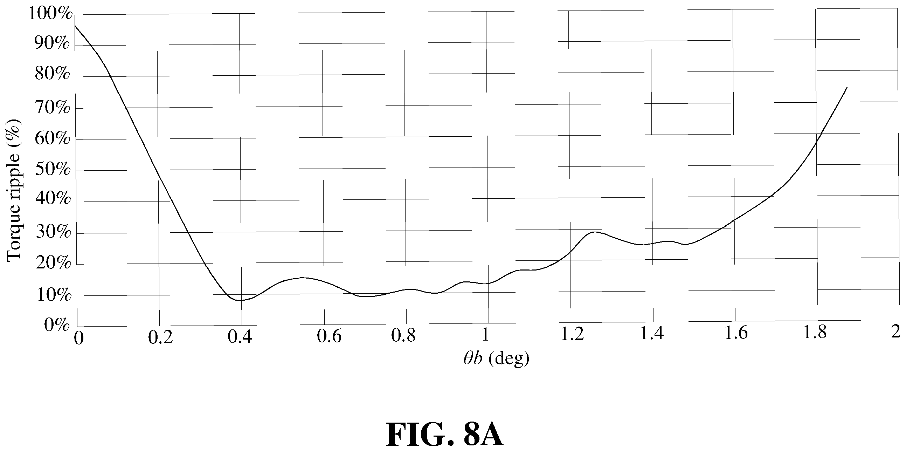

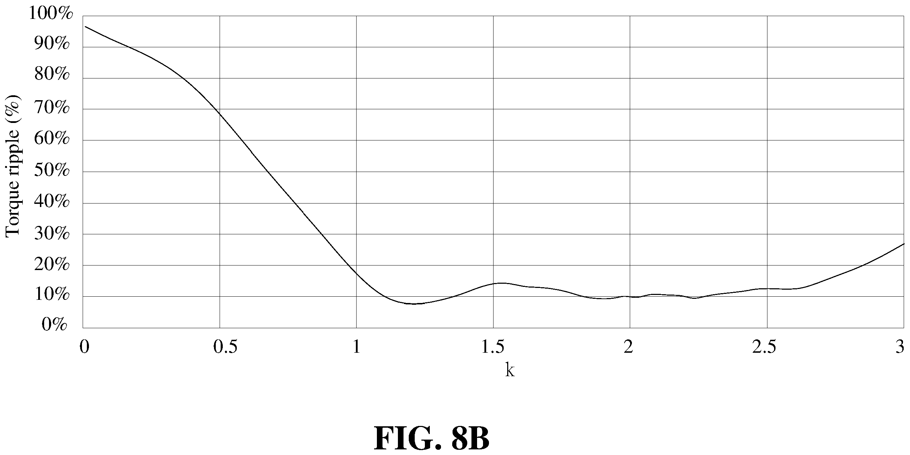

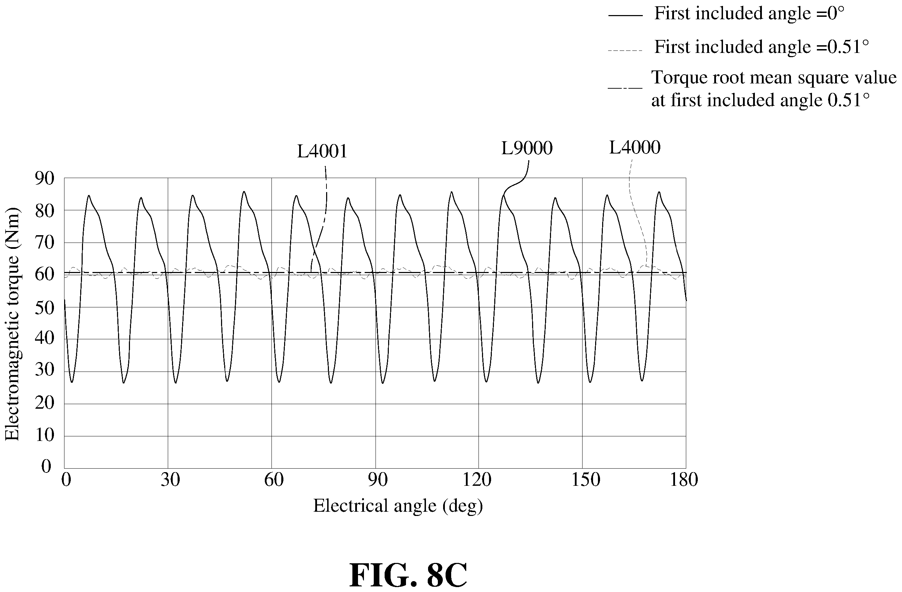

FIG. 8A is a schematic view illustrating the relationship between the first included angle (θb) and the torque ripple in yet another embodiment of the present invention; FIG. 8B is a schematic view illustrating the relationship between the real number (k) and the torque ripple in yet another embodiment of the present invention; FIG. 8C is a schematic view illustrating the relationship between the first included angle (θb) and the torque in yet another embodiment of the present invention. Refer to FIGS. 4A and 8A-8C. In yet another embodiment of the present invention, the number of stator slots 101 is forty-eight (Ns=48), and each motor pole number includes four, five or six rotor barriers. Under this structure, the real number (k) is set to 1.63. According to the formula of the first included angle (θb) = 36/Ns ±0.5°, the first included angle (θb) is set to 0.51°, and then according to the formula of included angle (θn)=[(n-1)×k+1]×θb, the remaining included angles (θn) can be set, in which the included angle (θn) can further include a deviation of any value within the range of ±72/ Ns °.

Under the structure of the present embodiment, FIG. 8C shows the curve L4000 of the first included angle (θb)=0.51°, the torque root mean square value curve L4001 of the first included angle (θb)=0.51° and the curve L9000 of the first included angle (θb) =0°. It can be seen from the torque root mean square value curve L4001 that the output torque of the low-torque ripple synchronous reluctance motor is 60.74 Newton meters (Nm), and the torque ripple of the low-torque ripple synchronous reluctance motor is 6.23%. Therefore, compared with curve L9000, the present invention can effectively reduce the torque ripple from 96.34% (at (θb)=0°) to 6.23% (at (θb)=0.51°). Similarly, through overlapping analysis, it can be found that the maximum and minimum of the output torque of the position of each barrier can be effectively staggered to achieve the effect of lessening peak and valley fluctuation and suppressing torque ripples.

In summary, the present invention provides a low-torque ripple synchronous reluctance motor. The low-torque ripple synchronous reluctance motor of the present invention includes the following functions and advantages: 1. discover the first included angle (θb) between the first rotor barrier end center line and the corresponding stator tooth center line. The first included angle (θb) is a key design parameter that affects the torque ripple. 2. the present invention provides a new formula of the first angle (θb) and the formula of other included angles (θn) to allow users to design a low-torque ripple synchronous reluctance motor based on the formulas. 3. the present invention effectively adjusts the phase of the output torque corresponding to each magnetic barrier through the setting of the first included angle (θb), so as to effectively suppress the maximum and minimum values of the resultant torque to achieve the objective of reducing peak and valley to provide a structure of low-torque ripple synchronous reluctance motor.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A low-torque ripple synchronous reluctance motor, including:
a stator, including a plurality of stator slots and a plurality of stator teeth, each of the stator teeth including a stator tooth center; and
a rotor, including a plurality of motor poles, each of the motor poles including a plurality of rotor barriers, the rotor barriers including a first rotor barrier to an n-th rotor barrier, the first rotor barrier including a first rotor barrier end center, the n-th rotor barrier includes an n-th rotor barrier end center, where n is a positive integer greater than 1;
wherein, a first rotor barrier end center line is defined between the first rotor barrier end center and a center of the rotor include, a stator tooth center line is defined between the stator tooth center and the center of the rotor, and the first rotor barrier end center line and a corresponding stator tooth center line defines a first included angle (θb);
wherein an n-th rotor barrier end center line is defined between the n-th rotor barrier end center and the center of the rotor, and the n-th rotor barrier end center line and a corresponding stator tooth center line defines an included angle (θn);
wherein the formula of the included angle (θn) is: (θn)=[(n-1)×k+1]×θb, the real number (k) is any value within the range of 2±0.5, and the formula of the first included angle (θb) is any value within the range of the first included angle (θb)=36/Ns ±0.5°, Ns is the number of stator slots.

2. The low-torque ripple synchronous reluctance motor according to claim 1, wherein the number of stator slots (Ns) is 24, and each of the motor poles includes two or three rotor barriers.

3. The low-torque ripple synchronous reluctance motor according to claim 1, wherein the number of stator slots (Ns) is 36, and each of the motor poles includes three or four rotor barriers.

4. The low-torque ripple synchronous reluctance motor according to claim 1, wherein the number of stator slots (Ns) is 48, and each of the motor poles includes four, five or six rotor barriers.

5. The low-torque ripple synchronous reluctance motor according to claim 1, wherein the included angle (θn) includes a deviation of any value within the range of ±72/Ns °.
